# EUROPEAN PATENT SPECIFICATION

(11) **EP 3 911 178 B1**
(45) Date of publication and mention of the grant of the patent: **09.12.2026**
(21) Application number: 20734400.3
(22) Date of filing: 26.06.2020
(51) Int. Cl.: A23L 27/00, A23L 29/25, A23L 29/281

(54) **FLAVORED FOOD PRODUCT**
AROMATISIERTES LEBENSMITTELPRODUKT
PRODUIT ALIMENTAIRE AROMATISÉ

(30) Priority: 27.06.2019 EP 19182821
(43) Date of publication of application: 24.11.2021
(73) Proprietor: Firmenich SA, 1242 Satigny (CH)
(72) Inventor: DARDELLE, Gregory, 1242 Satigny (CH); AEBERHARDT, Kasia, 1242 Satigny (CH); ERNI, Philipp, 1242 Satigny (CH); MUNT, Howard, 1242 Satigny (CH); WAGNER, Robert, 1242 Satigny (CH)
(74) Representative: Strych, Sebastian
(86) International application number: PCT/EP2020/068040
(87) International publication number: WO 2020/260593

(56) References cited:
- JP-A- H05 292 899
- US-A- 3 647 481
- US-A1- 2009 104 251
- US-A1- 2010 272 859

## Description

### Technical Field

The present invention relates to a flavored food product comprising a coacervate core-shell capsule comprising a flavor ingredient as well as methods and uses of the same.

### Background

Enhancing the consumer experience during eating and drinking is a key objective in the industrial production of food and beverages. The addition of flavor compositions to food products can strongly enhance the hedonic experience and therefore the product quality. However, flavoring compositions are typically sensitive to degradation and evaporation induced by heat or chemical reactions.

Methods of flavoring a food product having improved performance such as enhanced storage and transport stability and/or easy processability while still enabling release at the key moments of consumption are of interest in a wide range of food products such as wet soups and bouillons, ready-to-eat-meals (long cooking or bain marie preparation, retort/UHT-treated or pasteurized), meat products and meat analogue products (including soy-based products such as tofu or tempeh, or gluten-based products), seafood, dairy products such as yoghurts or dairy desserts, confectionery products, pet foods, or baked goods.

One possibility for enhancing the storage stability of flavors is encapsulation with a core-shell capsule. Core-shell capsules are polymeric structures that can be typically used to provide a stable environment for flavors. Coacervate core-shell capsules are traditionally used as flavor delivery systems that break under an applied force. Typically, such breakage happens during eating of the flavored final food products, and the capsule shell is ruptured during mastication, leading to release of the encapsulated flavor.

Traditional encapsulation of a flavor composition, however, leads to the undesirable effect that the flavor is not released until the moment of mastication. Alternatively, encapsulation systems such as spray-dried powders simply add the flavor to the product, with a poorly controlled release occurring during the addition of water.

US 2009/104251 A1 discloses a method of manufacturing a microcapsule that may include complex coacervating a protein and a polyanionic polymer to form a coacervate, the coacervate being at least a portion of the microcapsule, and wherein a cross-linking reagent is not used during the coacervation.

US 3 647 481 A discloses processes for the production of alliaceous flavoring compositions comprising reacting specified mixtures of Bunte salts (S-alkyl and/or S-alkylene thiosulfates) wherein the alkyl and alkylene groups contain up to three carbon atoms, with an alkali metal sulfide at temperatures of 0 DEG to 100 DEG C. to obtain a mixture of dialkyl, dialkylene, or alkyl alkylene di- and trisulfides having an alliaceous flavor impression.

JP H05 292899 A discloses a capsule obtained by using a transglutaminase as a coat curing agent in a complex coacervation method using one kind or two or more kinds of hydrophobic substances selected from alpha-linolenic acid, eicosapentaenoic acid, docosahexaenoic acid, flavor and a vitamin and used as a core substance, a protein such as gelatin and a polysaccharide such as gum arabic.

US 2010/272859 A1 discloses a complex coacervate delivery system is provided which encapsulates water-insoluble flavorants.

However, there is a growing interest to also enhance the consumer's experience during the short, but important preparation step of the food when preparing the food product rapidly such as for food products being convenience foods, such as ready-to-eat meals, retort soups, and other food products prepared rapidly by the consumer.

It would therefore be desirable to provide flavored food products that provide a flavor release not only upon mechanical stress such as rupture of core-shell capsules, but also during the preparation process such as cooking or steaming.

### Description of the Figures

- Figure 1:: Coacervate core-shell capsules used for the method of flavoring food products.

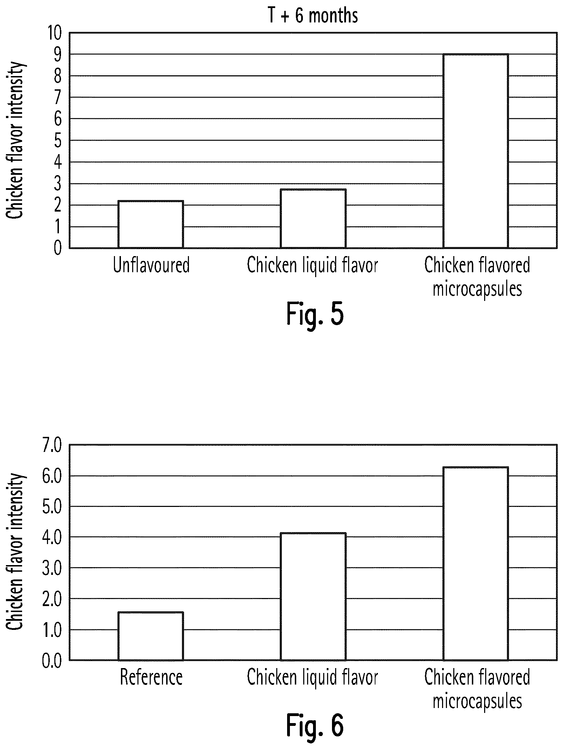

- Figures 2-5:: Average of chicken flavor intensities in Rice Sample 1 (unflavored), Sample 2 (chicken liquid flavor) and Sample 3 (chicken flavored microcapsules) perceived by trained sensory panelists. Samples evaluated after 2 days (Figure 2), 1 month (Figure 3), 3 months (Figure 4) and 6 months (Figure 5) of storage time T of jelly cubes at room temperature.
- Figure 6:: Average of chicken flavor intensities in Retort Bouillon Sample 1 (unflavored), Sample 2 (chicken liquid flavor) and Sample 3 (chicken flavored microcapsules).

### Detailed description

The present invention relates to a flavored food product comprising a coacervate core-shell capsule comprising a flavor ingredient, wherein the flavored food product is selected from the group consisting of bouillons in gel form and soups in gel form.

It is understood that a flavored food product provides an organoleptic impression to the consumer itself, i.e. the flavored food product is not flavored by the flavoring ingredient comprised in the coacervate core-shell capsules but by the flavors in the flavored food product.

According to the present invention, the flavored food product is selected from the group consisting of bouillons in gel form and soups in gel form.

It is understood that the flavored food product itself is not ready for consumption by the consumer but has to be prepared in a certain way, i.e. by mixing with a certain further food ingredient, i.e. soups or bouillons can be prepared by admixing water, and/or heating it to a degree where the food product is usually consumed, i.e. soups or bouillons are heated to boiling water degree (around 100°C).

It is understood by the flavored food product in form of a gel or in gel form, that it relates to its form when consumed by the consumer or before the preparation by the consumer. Preferably, the flavored food product being in form of a gel relates to its form before preparation by the consumer in a certain way, i.e. by mixing with a certain further food ingredient, i.e. soups or bouillons can be prepared by admixing water, and/or heating it to a degree where the food product is usually consumed, i.e. soups or bouillons are heated to boiling water degree (around 100°C).

A material can be considered as being in gel form, i.e. being a viscoelastic solid, when the storage modulus G' (stored deformation energy) is higher than the loss modulus G" (deformation energy dissipated). Furthermore, in addition to having a storage modulus G' exceeding the loss modulus, gels formed by polymers are known to exhibit no or only a weak frequency dependence of the moduli, meaning that the storage modulus is higher than the loss modulus across a broad range of mechanical testing frequencies. Methods to measure such viscoelastic properties and definitions of gels are described in the scientific literature, see for example "The Structure and Rheology Complex Fluids", R.G. Larson, Oxford University Press, 1998.

In an embodiment, the gel of the bouillons in gel form or soups in gel form can be expressed by a ratio of the storage modulus G' : loss modulus G" of more than 1, preferably at least 3, more preferably at least 5.

In an embodiment, the gel of the bouillons in gel form or soups in gel form have a loss modulus G" of at least 10 Pa, preferably at least 50 Pa.

For the sake of clarity, the requirements for G':G" should preferably apply to the whole flavored product and not just for a part of it. Thereby it is understood that the flavored product preferably does not consist of a solid envelope material covering a core.

The above values should preferably be measured under the following conditions applied in standard oscillatory tests conducted with a standard state of the or low deformation rheometer as being commercially available from e.g. Anton Paar (Germany) or TA Instruments (US):
- a maturation time of at least 12 h under ambient condition,
- a measurement temperature of 25°C,
- an oscillatory frequency of 1 rad/s and
- a strain of 1%.

In a particular embodiment, the flavored food product selected from the group consisting of bouillons in gel form and soups in gel form are prepared as described in WO 2007/068484 A1; the content of which with regard to the ingredients and method of preparation in order to obtain a bouillon in gel form or a soup in gel form is herewith included by reference.

According to the present invention, the flavored food product comprises a coacervate core-shell capsule comprising a flavoring ingredient.

The term "flavoring ingredient" or "flavor" or the like is understood to define a variety of flavor and fragrance materials of both natural and synthetic origins, including single compounds or mixtures. Specific examples of such components may be found in the literature, e.g. in Fenaroli's Handbook of Flavor Ingredients, 1975, CRC Press; synthetic Food Adjuncts, 1947 by M.B. Jacobs, edited by van Nostrand; or Perfume and Flavor Chemicals by S. Arctander 1969, Montclair, N.J. (USA). These substances are well known to the person skilled in the art of flavoring and/or aromatizing foods and consumer products.

The flavoring ingredient may be a taste modifier. A "taste modifier" is understood as an active ingredient that operates on a consumer's taste receptors, or provides a sensory characteristic related to mouthfeel (such as body, roundness, or mouth-coating) to a product being consumed. Non-limiting examples of taste modifiers include active ingredients that enhance, modify or impart saltiness, fattiness, umami, kokumi, heat sensation or cooling sensation, sweetness, acidity, tingling, bitterness or sourness.

The flavoring ingredients can be a complex flavor emulating certain organoleptic characteristics, such as sweet and savory tonalities as for example in chicken, beef, pork or shrimp flavor.

The coacervate core-shell capsule comprises a core which is completely surrounded by a coacervate shell. It is understood that the core is completely encapsulated by a coacervate shell.

The core material may be in the liquid or solid state at temperatures from 20°C to 30°C.

According to an embodiment, the core material is a liquid at temperatures from 20°C to 30°C.

According to another embodiment, the core material is a solid at temperatures from 20°C to 30°C.

The core material may be hydrophobic, meaning it is immiscible with water at temperatures from 20°C to 30°C and is present in the form of a separate, hydrophobic phase.

The core may comprise at least 5 wt.%, more preferably at least 10 wt.%, even more preferably at least 20 wt.%, most preferably at least 30 wt.%, e.g. at least 40 wt.% of chemical compounds possessing a vapor pressure of higher than 0.007 Pa (the vapor pressure being specified for a reference temperature of 25°C).

Preferably, at least 10 wt.% of the core material possess a vapor pressure above 0.1 Pa, more preferably, at least 10 wt.% have a vapor pressure of > 1 Pa at 25°C, and most preferably, at least 10 wt.% have a vapor pressure of > 10 Pa at 25°C.

The given value of 0.007 Pa at 25°C for the vapor pressure is generally regarded as a limiting value identifying compounds with a volatile character. For the purpose of the present invention, the vapor pressures are determined by calculation using the method disclosed in "EPI suite" software; 2000 U.S. Environmental Protection Agency.

Preferably, the core of the coacervate core-shell capsule comprises the flavor ingredient. In other words, the flavor ingredient is encapsulated in the core of the coacervate core-shell capsule.

The core of the coacervate core-shell capsule may comprise a fat matrix, preferably wherein the fat matrix comprises food grade oils.

The fat matrix may comprise (i) a hydrogenated oil or (ii) a hydrogenated fat or (iii) cocoa butter or (iv) a mixture of i-iii.

Preferably, hydrogenated oils include hydrogenated palm oil, hydrogenated soybean oil and hydrogenated cottonseed oil.

Preferably, hydrogenated fat includes cocoa fat.

More preferably, the fat matrix comprises a mixture of a fat and a hydrogenated oil. Even more preferably, the fat matrix comprises a mixture of hydrogenated palm oil with coco fat and/or cocoa butter.

The shell of the core-shell capsules may comprise a protein and, optionally, a non-protein polymer.

Preferably, the shell of the coacervate core-shell capsule comprises a protein and a non-protein polymer.

Preferably, the non-protein polymer is charged oppositely to the protein, i.e. in case the protein is positively charged, the non-protein polymer may be negatively charged or neutral and, in case the protein is negatively charged, the non-protein polymer may be positively charged or neutral.

Alternatively, the shell of the coacervate core-shell capsules may comprise two non-protein polymers, preferably one of which is chitosan.

The coacervate core-shell capsules may be made by "simple" and by "complex" coacervation. By simple coacervation it is understood that the protein alone made to undergo phase separation and is then used to form a capsule wall. By complex coacervation are understood methods in which a generally oppositely charged non-protein polymer and a protein together form the capsule shell.

Preferred proteins in the coacervation processes and comprised in the shell include albumins, plant proteins, vegetable globulins and gelatins.

Preferably, the protein is selected from the group consisting of a plant protein, preferably, pea proteins, soy proteins, rice proteins, wheat proteins, potato proteins, corn proteins, whey proteins, lupin proteins or mixtures thereof, or gelatin.

Preferably, the protein is selected from gelatin.

Preferably, the gelatin may be derived from fish, pork, beef, and/or poultry.

Preferably, the protein used to form the capsule wall is gelatin derived from fish, pork, beef or poultry.

Preferably, the protein is gelatin derived from fish, preferably from warm water fish, or from pork. Warm water fish are generally known to be fish that are capable of tolerating water above 27°C over prolonged time.

Preferably, the gelatin, preferably derived from warm water fish or pork, has a bloom value of from about 10 to about 300 bloom, more preferably from about 200 to about 300 bloom.

Preferred non-protein polymers in the coacervation process and which form the shell of core-shell capsules by complex coacervation methods may include, in particular, negatively charged polymers.

Preferably, the non-protein polymers may be selected from the group of polymers consisting of gum arabic, xanthan, agar, alginate salts, carboxymethyl cellulose, pectinate salts, or carrageenan, or mixtures thereof.

Preferably, the non-protein polymer is selected from gum arabic.

Further suitable non-proteins can be derived from the literature, for example De Kruif et al., Current Opinion in Colloid and Interface Science, Vol. 9, pp 340-349, 2004.

Preferably, the coacervate core-shell capsule comprising a flavor ingredient is prepared by the method comprising the steps of:
- preparing a hydrocolloid solution by dissolving at least one first polymer in aqueous solution, preferably water; wherein the first polymer is a non-protein polymer or a protein polymer
- preparing a hydrocolloid solution by dissolving at least one second polymer, wherein the second polymer is a non-protein polymer in aqueous solution, preferably water;
- mixing the hydrocolloid solutions comprising at least one first polymer and at least one second polymer;
- preparing, an emulsion and/or suspension by emulsifying and/or suspending the flavoring ingredient in the solution;
- forming a colloid wall comprising the first and second polymer around droplets and/or particles of the flavoring ingredient present in an emulsion and/or suspension;
- optionally, cooling the hydrocolloid solutions to a temperature below the gelling temperature of the protein; and
- cross-linking the colloid wall.

The coacervate capsules may be prepared by forming a first hydrocolloid solution of the protein material above its gelling temperature, preparing a second hydrocolloid solution of the non-protein polymer, and then mixing the two hydrocolloid solutions to form a third solution.

The first solution may comprise dissolving at least on protein, preferably gelatin, in aqueous solution, preferably water, and maintaining it at a temperature from 30°C to 50°C, preferably from 35°C to 45°C and even more preferably from 38 to 42°C.

In the first solution, the protein may be present in the aqueous solution in an amount of from 0.5 to 20 wt%, more preferably from 1 to 15 wt%, even more preferably from 7 to 13 wt%.

The second solution may comprise dissolving at least one non-protein polymer, preferably gum arabic, in aqueous solution, preferably water, and maintaining it at a temperature from 30°C to 50°C, preferably from 35°C to 45°C and even more preferably from 38 to 42°C.

In the second solution, the non-protein polymer may be present in the aqueous solution in an amount from 0.5 to 20 wt%, more preferably from 1 to 15 wt%, even more preferably from 7 to 13 wt%.

The first and second solution may be mixed under agitation to form the third solution.

Preferably, the weight ratio between the protein and the non-protein polymer is in a range from 3:1 to 1:3, more preferably from 2:1 to 1:1, and most preferably about 3:2.

The pH of the third aqueous solution may be adjusted to a pH value of 4.3 to 4.7.

The pH of the third aqueous solution may be adjusted by the addition of a food grade acid solution, preferably by addition of an aqueous lactic acid solution.

The flavor ingredient may be introduced into the third solution under shear to form an emulsion or suspension.

The emulsion or suspension may be prepared in a conventional manner.

The emulsion or suspension may be prepared by adding the flavor ingredient to the third solution over a period of about 3 to 10 minutes, preferably 4 to 6 minutes.

The emulsion or suspension may be prepared with an impeller stirrer being adjusted to a speed of 300 to 400 rpm. The stirrer speed may be adjusted as desired.

In this step, also known as the "coacervation" step, two separate phases may be created, namely, the coacervate phase (enriched in polymer) and the coexisting solvent (depleted of polymer). The coacervate phase may be generally composed of the protein and, optionally, the non-polymer compound.

The coacervation may be facilitated by modifying, preferably lowering, the pH to below the isoelectric point of the protein.

If a non-protein polymer is present, the pH for coacervation is preferably adjusted such that the positive charges on the proteins are neutralized by the negative charges on the non-protein polymer.

The pH is adjusted by the addition of a food grade acid solution, preferably by addition of an aqueous lactic acid solution.

Phase separation may be also induced by various other ways by changing the physicochemical environment of the solution, e.g. salting out or addition of a second high-molecular weight component so as to induce phase separation.

The temperature of the mixture may be then reduced below the gelling temperature of the protein. The determination of the gelling temperature of the protein, preferably gelatin, can be established, in part by experiment, the techniques of which are well known in the art.

In particular, oscillatory rheology can be used to measure the onset of elasticity in the protein solution under cooling, and the temperature at which the elastic modulus exceeds the viscous modulus is generally considered a gelation temperature.

Preferably, the temperature is cooled below 25°C, preferably below 22°C, more preferably below 20°C. Preferably, the temperature is cooled not lower than 5°C

The shell of the capsule may be cross-linked using a cross-linking agent. Typically, a cross-linking agent may be used to harden the capsule shell.

The cross-linking agents may include formaldehyde, acetaldehyde, glutaraldehyde, glyoxal, chrome alum or transglutaminase.

Preferably, the cross-linking agent is transglutaminase. Transglutaminase is well described in the public domain and commercially available.

Preferably, the transglutaminase is used at 10-100, preferably 30-60 activity units per gram of gelatin.

Preferably, the cross-linking is conducted at a temperature within the range of 5 to 40°C, preferably 15 to 25°C, more preferably 20 to 25°C.

Preferably, the pH during the cross-linking is adjusted to a level at which cross-linking can be conducted effectively. Preferably, if cross-linking is performed enzymatically using transglutaminase, the pH may be adjusted to 3 to 7, more preferably 3.5 to 5.5.

Preferably, the cross-linking has been/is carried out for a time period of from 1 to 15 h, preferably from 2 h to 12 h, more preferably from 7 h to 10 h, in particular at ambient temperature (i.e. at 20 to 25°C).

Alternatively, the cross-linking has been/is carried out for a time period of from 1 to 15 h, preferably from 1 to 4 h, more preferably from 1.5 h to 3 h, in particular at ambient temperature (i.e. at 20 to 25°C).

It is disclosed that the coacervate core-shell capsule comprising a flavor ingredient may be prepared so that the flavoring ingredient is releasable during the preparation of the flavored food product, such as by diffusion by exposure to heat and/or humidity, and, optionally, by mastication of the food product, such as by mechanical breakage of the capsules.

Preferably, the coacervate core-shell capsule has a degree of cross-linking between 10 and 70 % following the method described in Soft Matter, 2011,7, 3315-3322 (Determination of covalent cross-linker efficacy of gelatin strands using calorimetric analyses of the gel state).

Preferably, the coacervate core-shell capsule has a rupture force between 0.01 and 10 N, preferably between 0.1 and 2 N. The rupture force can be measured by compression of the capsule between parallel plates in a mechanical testing instrument, for example a Texture Analyzer (Food Technology Corporation, USA), an Instron Mechanical Testing machine (Instron, USA) or also using a rheometer device equipped with a normal force transduced (e.g. DHR-2 Rheometer manufactured by TA Instruments, USA or MCR Rheometer manufacture by Anton Paar GmbH, Germany).

The coacervate core-shell capsule may have a median capsule size of from 100 µm to 800 µm, preferably from 200 µm to 600 µm, more preferably from 250 µm to 450 µm. The median capsule size of the coacervate core-shell capsules can be determined by standard laser diffraction particle size analysis or by light microscopy combined with image analysis. Here, for present invention, the capsule size refers to values based on number-based size distributions as measured by light microscopy (e.g. with a Nikon TE2000 microscope) and image analysis (performed with Nikon NIS Elements Software). Methods to obtain median and average size distributions are described in the scientific literature, e.g. R. J. Hunter, "Introduction to Modern Colloid Science", Oxford University Press, 1994).

The present invention also relates to a method of conferring, improving, enhancing or modifying the flavor of a flavored composition or in a flavored consumer product by using a coacervate core-shell capsule comprising a flavor ingredient as defined hereinabove during the preparation of the flavored composition or flavored consumer product, such as by diffusion by exposure to heat and/or humidity, and, optionally, by mastication of the food product, such as by mechanical breakage of the capsules, wherein the conferring, improving, enhancing or modifying the flavor relates to the flavor intensity, wherein the flavored composition or the flavored consumer product is selected from the group consisting of bouillons in gel form and soups in gel form.

The following are examples of "flavored composition" or "flavored consumer product" not according to the claimed invention. By "flavored composition" or "flavored consumer product" it is meant to designate an oral composition or edible product such as, for example, pharmaceutical compositions, edible gel mixes and compositions, dental compositions, foodstuffs beverages and beverage products.

The flavored composition or flavored consumer product may be in a different form. A non-exhaustive list of suitable form of the flavored composition or flavored consumer product may include fried, frozen marinated, battered, chilled, dehydrated, powder blended, canned reconstituted, retorted, baked, cooked, fermented, microfiltered, pasteurized, blended or preserved. Therefore, a flavored composition or flavored consumer product comprises coacervate core-shell capsule comprising a flavor ingredient as defined hereinabove, as well as optional benefit agents, corresponding to taste and flavor profile of the desired edible product.

The nature and type of the constituents of the foodstuffs or beverages do not warrant a more detailed description here, the skilled person being able to select them on the basis of his general knowledge and according to the nature of said product.

Typical examples of said flavored consumer product include:
- Baked goods (e.g. breads, dry biscuits, cakes, rice cakes, rice crackers, cookies, crackers, donuts, muffins, pastries, pre-mixes, other baked goods),
- Non-alcoholic beverages (e.g. alcohol-free-beer, aqueous beverages, enhanced/slightly sweetened water drinks, flavored carbonated and still mineral and table waters, carbonated soft drinks, non-carbonated beverages, carbonated waters, still waters, softs, bottled waters, sports/energy drinks , juice drinks, vegetable juices, vegetable juice preparations, broth drinks),
- Alcoholic beverages (e.g. beer and malt beverages, low alcohol beer, spirituous beverages, wines, liquors),
- Instant or ready-to-drink beverages (e.g. instant vegetable drinks, powdered soft drinks, instant coffees and teas, black teas, green teas, oolong teas, herbal infusions, cacaos (e.g. water- based), tea-based drinks, coffee-based drinks, cacao-based drinks, infusions, syrups, frozen fruits, frozen fruit juices, water-based ices, fruit ices, sorbets),
- Cereal products (e.g. breakfast cereals, cereal bars, energy bars/nutritional bars, granolas, pre-cooked ready-made rice products, rice flour products, millet and sorghum products, raw or pre-cooked noodles and pasta products),
- Dairy based products (e.g. fruit or flavored yoghurts, ice creams, fruit ices, frozen desserts, fresh cheeses, soft cheeses, hard cheeses, milk drinks, wheys, butters, partially or wholly hydrolysed milk protein-containing products, fermented milk products, condensed milks and analogues)
- Dairy analogues (imitation dairy products) containing non-dairy ingredients (plant-based proteins, vegetable fats),
- Confectionary products (e.g. filings, toppings, chewing gums, hard and soft candies),
- Chocolate and compound coatings (e.g. chocolates, spreads),
- Products based on fat and oil or emulsions thereof (e.g. mayonnaises, spreads, regular or low fat margarines, butter/margarine blends, flavored oils, shortenings, remoulades, dressings, salad dressings, spice preparations, peanut butters),
- Eggs or egg products (dried eggs, egg whites, egg yolks, custards),
- Desserts (e.g. gelatins, puddings, dessert creams),
- Products made of soya protein or other soya bean fractions (e.g. soya milk and products made therefrom, soya lecithin-containing preparations, fermented products such as tofu or tempeh or products manufactured therefrom, soya sauces),
- Vegetable preparations (e.g. ketchups, sauces, processed and reconstituted vegetables, dried vegetables, deep frozen vegetables, pre-cooked vegetables, vegetables pickled in vinegar, vegetable concentrates or pastes, cooked vegetables, potato preparations),
- Fruit preparations (e.g. jams, marmalades, canned fruits)
- Vegetarian and/or vegan meat analogues or meat replacers, , vegetarian/vegan burgers, vegetarian/vegan nuggets, vegetarian/vegan sausages, vegetarian/vegan shredded meat,
- Spices or spice preparations (e.g. mustard preparations, horseradish preparations, pickles), spice mixtures and, in particular seasonings which are used, for example, in the field of snacks.
- Snack articles (e.g. baked or fried potato crisps or potato dough products, bread dough products, extrudates based on maize, rice or ground nuts),
- Ready dishes (e.g. instant noodles, rice, pastas, pizzas, tortillas, wraps) and soups and broths (e.g. stock, savory cubes, dried soups, instant soups, pre-cooked soups, retorted soups), sauces (instant sauces, dried sauces, ready-made sauces, gravies, sweet sauces, a relish sauces, a sour sauces),
- oral care product, such as toothpastes, mouth washes, dental care products (e.g. denture adhesives), dental rinsing, mouth sprays, dental powders, dental gels or dental floss,
- pet or animal food.

The flavor intensity is understood the perception of the aroma in the flavored composition or flavored consumer product.

In a particular embodiment, the flavor intensity is evaluated by 8 trained panelists on a blind test basis and by being asked to rate the samples for flavor intensity on a scale of 0 to 10 (0 denoted no flavor intensity or no perception of the aroma and 10 denoted extremely strong intensity or strong perception of the aroma).

Preferably, the flavor intensity is improved or enhanced.

In a particular embodiment, the flavor intensity is rated as at least 5, preferably at least 6, more preferably at least 7 when evaluated by 8 trained panelists on a blind test basis and by being asked to rate the samples for flavor intensity on a scale of 0 to 10 (0 denoted no flavor intensity or no perception of the aroma and 10 denoted extremely strong intensity or strong perception of the aroma).
The present invention also relates to a use of a coacervate core-shell capsule comprising a flavor ingredient as defined hereinabove for conferring, improving, enhancing or modifying the flavor of a flavored composition or flavored consumer product during preparation of the flavored composition or flavored consumer product, such as by diffusion by exposure to heat and/or humidity, and, optionally, by mastication, such as by mechanical breakage of the capsules, wherein the conferring, improving, enhancing or modifying the flavor relates to the flavor intensity, wherein the flavored composition or the flavored consumer product is selected from the group consisting of bouillons in gel form and soups in gel form.

The embodiments with regard to the method of conferring, improving, enhancing or modifying the flavor of a flavored composition or in a flavored consumer product apply *mutatis mutandis* to the use thereof.

### Examples

The Examples provided in the following demonstrate the practice of the invention and summarize its preferred aspects. These representative examples are, however, not intended to limit the scope of the invention described hereinabove.

### Example 1a: Preparation of core-shell capsules suitable for flavoring food products according to the invention

A chicken flavor is microencapsulated within a hydrocolloid shell according to a complex coacervation process. The shell is cross-linked such that a low-permeability capsule results, providing stability to the flavor. When used in applications, these capsules allow a flavor release by mechanical rupture ('burst') of the capsule shell.

Pork gelatin type A (275 Bloom) and gum Arabic (Efficacia^{®}, from CNI) are used as the hydrolocolloids. A stock solution of gelatin (solution A) is prepared by mixing 180 g of warm deionised water and 20 g of gelatin in a vessel until it is completely dissolved; the solution is then maintained at 40°C. A stock solution of gum Arabic (solution B) is prepared by mixing 180 g of cold deionised water and 20 g of gum Arabic in a vessel until it is completely dissolved; the solution is then warmed and kept at 40°C.

105.4 g of solution A is mixed with 70.3 g of solution B in a vessel under gentle agitation (the gelatin/gum Arabic ratio is 1.5:1). The pH is adjusted to 4.6 with a 50% w/w aqueous lactic solution. 70.3 g of chicken flavor is slowly added to the gelatin and gum Arabic mixture and homogenised with a stirrer at 350 RPM during 5 min, so as to reach an average droplet size of 350 mm. The system is then diluted by the addition of 354.1g of warm deionised water, which bring the total hydrocolloid concentration to 3.4 % w/w. The mixture is finally cooled to 20°C at a rate of 0.5°C·min⁻¹.

The stirring speed is slightly decreased, the pH is adjusted to 4.5 and 4.22 g of transglutaminase (ACTIVA^{®} WM supplied by Ajinomoto) is added to the mixture. Cross-linked is allowed to proceed during 15 h at 20°C. The suspension is then heated at 60°C during 30 min to inactivate the enzyme and stop the crosslinking reaction. The result is an aqueous suspension of microcapsules.

### Example 1b: Preparation of diffusive core-shell capsules suitable for flavoring food products according to the invention

Capsules were prepared following the same general procedure as described in Example 1a. However, in this example the capsule shell was hardened such that the permeability of the shell is weaker and the release of flavor from the capsule by diffusion is facilitated. As in Example 1, Pork gelatin type A and gum arabic are used as the hydrolocolloids. Solution A is prepared by mixing 180 g of warm deionised water and 20 g of gelatin in a vessel until it is completely dissolved; the solution is then kept at 40°C. Solution B is prepared by mixing 180 g of cold deionised water and dissolving 20 g of gum arabic in a vessel; the solution is then warmed and kept at 40°C.

105.4 g of solution A is mixed with 70.3 g of solution B in a vessel under gentle agitation (the gelatin/gum Arabic ratio is 1.5:1). The pH is adjusted to 4.6 with a 50 % w/w aqueous lactic solution. 70.3 g of chicken flavor is slowly added to the gelatin and gum arabic mixture and homogenised. The system is then diluted by the addition of 354.1 g of warm deionised water, which bring the total hydrocolloid concentration to 3.4 % w/w. The mixture is finally cooled to 20°C at a rate of 0.5°C·min⁻¹.

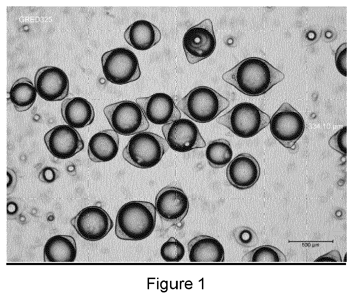

The stirring speed is slightly decreased, the pH is adjusted to 4.5 and 4.22g of transglutaminase (ACTIVA^{®} WM supplied by Ajinomoto) is added to the mixture. Cross-linked is allowed to proceed during 2 hours at 20°C. The suspension is then heated at 60°C during 30 min to inactivate the enzyme and stop the crosslinking reaction. The result is an aqueous suspension of microcapsules (see Figure 1) with a much weaker degree of cross-linking, which in combination with the method of flavoring food products described below allow for a predominantly diffusive release of the flavor, for example during cooking.

### Example 1c: Preparation of solid core-shell capsules suitable for flavoring food products according to the invention, with a solidified core at room temperature

This example describes the preparation of flavor capsules suitable to flavor food products according to the invention; here, the core of the capsule additionally contains a fatty matrix to provide a solid core at room temperature; upon heating during the preparation of the final food product, this solid core can melt upon heating.

A stock solution of gelatin (solution A) was prepared by mixing 180 g of warm deionised water and 20 g of gelatin (warm water fish gelatin, 200 Bloom, supplied by Weishardt) in a vessel until it was completely dissolved and kept at 40°C. A stock solution of gum arabic (solution B) was prepared by mixing 180 g of cold deionised water and 20 g of gum Arabic (Efficacia(R), from CNI) in a vessel until it was completely dissolved; the solution was then warmed and kept at 40°C.

The active ingredient (solution C) was prepared by heating in a vessel at 60°C a 2:3 (by weight) mixture of coco fat (Margo Cocos) and hydrogenated palm oil (Stable flake P, Cargill) until the fat mixture was completely melted. 35 g of the flavor was then added to obtain a homogeneous oily mixture. The solution was kept under gentle agitation at 45°C. 105 g of solution A was mixed with 70g of solution B in a vessel under gentle agitation (the gelatin/gum Arabic weight ratio being 1.5:1). The pH value was adjusted to 4.6 with a 50% w/w aqueous lactic solution.

70g of the active ingredient/fat mixture (solution C) is slowly added to the previously mixed solutions A and B and homogenized with a stirrer at a rotation speed of 150 RPM during 5 minutes, resulting in number-based average droplet diameters of 500-1000 micrometers.

The system was then diluted by the addition of 356 g of warm deionised water, bringing the total hydrocolloid concentration to 3.4 % w/w. The mixture was finally cooled to 20°C at a rate of 0.5°C.min. To harden the capsule shells, the stirring speed was slightly decreased, the pH adjusted to 4.5 and 4.22 g of the enzyme transglutaminase (ACTIVA(R) WM supplied by Ajinomoto) was added to the mixture. Cross-linking was allowed to proceed during 15 hours at 20°C. The result was an aqueous suspension of microcapsules with a solid core at room temperature and a strongly cross-linked shell. These capsules provide additional stability to the encapsulated flavor since the core remains solid at room temperature but liquefies upon heating, with the molten core allowing subsequent release of the flavor during eating by mechanical breakage.

Additionally, capsules were prepared with the same formulation but with shells hardened in a different manner, with the cross-linking step adapted for use with the method for flavoring food products described in this invention. In this case, the cross-linking step was performed at the same temperature, but the cross-linking time was set to 2 hours, resulting in capsule shells with enhanced permeability. In combination with the core formulation that is solid at room temperature but melts upon heating during preparation of the food product; once molten, the more permeable shells provide a facilitated diffusive release of the flavor.

### Example 2: Evaluation of liquid chicken flavor and chicken flavored microcapsules in jelly cube, cooked with rice

In the following example, the method according to the invention is used to flavor jelly cubes suitable to prepare bouillons, soups or gravies. A comparison is made between samples that are unflavored, samples that contain a non-encapsulated, free liquid flavor, and sample containing core-shell capsules containing the flavor. This example demonstrates that the method provides a strong stabilization of the flavor during storage and allows to release the flavor upon eating.

Jelly cubes were prepared according to the formulation given in Table 1 below.

**Table 1: Formulation of the jelly cubes prepared to demonstrate the method of flavoring food products using core-shell microcapsules:**

| **Ingredients (in grams)** | **Jelly cube 1** | **Jelly cube 2** | **Jelly cube 3** |
|---|---|---|---|
| Sugar | 9.6 | 9.6 | 9.6 |
| Salt | 19.8 | 19.8 | 19.8 |
| Sea Salt Less Sodium | 11.2 | 11.2 | 11.2 |
| Water | 88.8 | 88.26 | 48.3 |
| Thickener | 2 | 2 | 2 |
| | | | |
| Taste Enhancer Flavour | 4.2 | 4.2 | 4.2 |
| Yeast extract | 2 | 2 | 2 |
| Liquid chicken flavor | | 0.54 | |
| Slurry of chicken flavored microcapsules | | | 40.5 |

Jelly cubes were prepared by the following process: All dry ingredients were mixed to form a homogeneous powder blend. Water was weighed in, and the liquid chicken flavor (for Jelly cube 2) or the chicken-flavored microcapsules (for Jelly cube 3) were dispersed in the water. The pre-mixed dry ingredients were then poured in under agitation. Subsequently, the temperature was raised to 80°C under constant stirring and retained at 80°C during 3 minutes while continuing to stir. Finally, the hot mixture was filled into 18 g molds, the molds were sealed and left to cool down to room temperature. 6 jelly cube samples of each formulation were prepared. The key ingredients in the powder blend are salt, sugar, yeast extract, and a thickener to induce gel formation of hot liquid mixture upon cooling. No preference is given here to specific thickeners, and either a single thickener or a mixture of thickeners may easily be chosen by the person skilled in the art. Such thickeners include, but are not limited to, gelatin (fish, pork, or beef), carrageenans, alginates, pectins or xanthan. It was found that regular pork gelatin (275 Bloom) or mixtures of xanthan with at least another polysaccharaide give satisfactory results for the gel properties.

Chicken flavored microcapsules in **Jelly cube 3** were formulated using the same liquid chicken flavor applied in **Jelly cube 2.** The quantity of chicken flavored microcapsules in **Jelly cube 3** was defined to match the amount of liquid chicken flavor encapsulated in **Jelly cube 2.**

The jelly cubes were used to cook rice in the quantities summarized in Table 2 below.

**Table 2: Formulation of the jelly cubes prepared to demonstrate the method of flavoring food products using core-shell microcapsules:**

| **Ingredients (in grams)** | **Sample 1** | **Sample 2** | **Sample 3** |
|---|---|---|---|
| | unflavored | chicken liquid flavor | slurry of chicken flavored microcapsules |
| White rice | 120 | 120 | 120 |
| Water | 300 | 300 | 300 |
| Jelly cube 1 | 18 | | |
| Jelly cube 2 | | 18 | |
| Jelly cube 3 | | | 18 |

The process for preparing the rice is the following:
- Weigh 120g of white rice and pour it in a rice cooker
- Add 300ml of water
- Add one jelly cube
- Let cook for around 20 minutes until complete absorption and evaporation of water, and mix from time to time to homogenously disperse the jelly cube

Samples 1, 2 and 3 were freshly prepared for sensory evaluation with jelly cubes stored during 2 days, 1 month, 3 months and 6 months at room temperature.

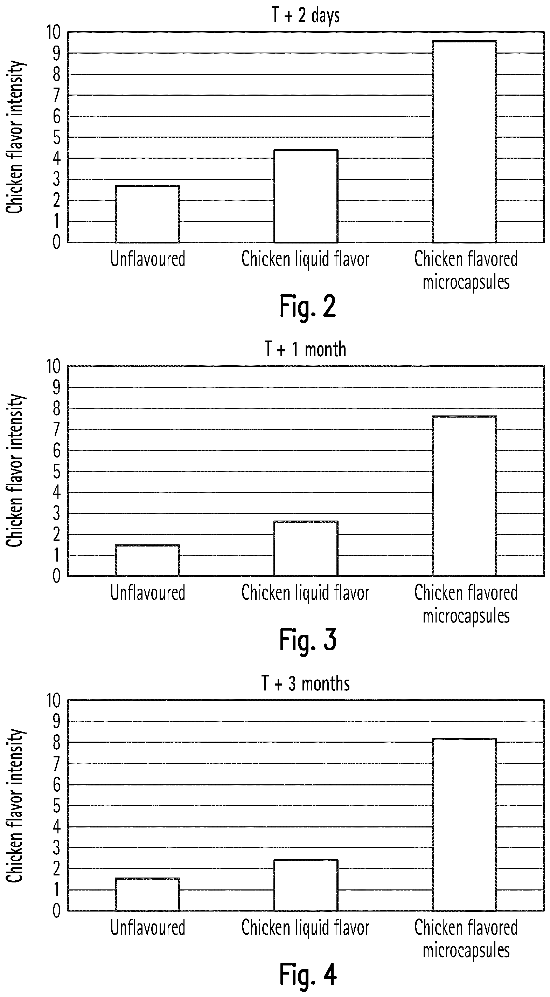

In each session, samples 1, 2 and 3 were presented to 8 trained panelists on a blind test basis. They were asked to rate the samples for chicken flavor intensity on a scale of 0 to 10 (0 denoted no chicken flavor intensity and 10 denoted extremely strong chicken intensity). The results are reported in Figure 2.

### Example 3: Evaluation of liquid chicken flavor and chicken flavored microcapsules in retort chicken bouillons

In the following example, the suitability of the method to flavor a retort chicken bouillon product is demonstrated. The example shows that capsules with suitable shell permeability, formulated according to Example 1, allow partitioning of the flavor through the shell is under high pressure/high heat conditions such that a significant improvement is observed as compared the liquid free flavor.

### Preparation of the bouillon

A homogeneous dry mix of the following ingredients was prepared:

| **Ingredients** | **Percent (w/w)** |
|---|---|
| Salt | 21.5 |
| Yeast extract | 13.71 |
| Rosemary extract | 0.08 |
| Cornstarch Modified Colflo 67 | 39.58 |
| Chicken fat | 25.13 |

The bouillon was prepared by adding 67 g of the dry mix in 2500 ml of boiling water.

### Preparation of the cans:

Each can was filled according to the quantities specified in Table 3 below.

**Table 3: Canned samples used for the evaluation of liquid chicken flavor and chicken flavored microcapsules in retort chicken bouillons.**

| **Ingredients (in grams)** | **Sample 1** | **Sample 2** | **Sample 3** |
|---|---|---|---|
| | unflavored | chicken liquid flavor | chicken flavored microcapsules |
| Chicken bouillon | 200 | 200 | 200 |
| Liquid chicken flavor | | 0.016 | |
| Slurry of chicken flavored microcapsules | | | 3.2 |

Chicken flavored microcapsules in **Sample 3** were formulated using the same liquid chicken flavor applied in **Sample 2.** The quantity of chicken flavored microcapsules in **Sample 3** was defined to match the amount of liquid chicken flavor encapsulated in **Sample 2.**

The cans were sealed and retorted at 121 °C with a F0-value of 7 minutes, in a rotary pressurized autoclave (Pilot Rotor Stock Sterilisation System PRG400), with indirect steam heating and water immersion.

### Sensory evaluation of the bouillons

Samples 1, 2 and 3 were presented to 8 trained panelists on a blind test basis. They were asked to rate the samples for chicken flavor intensity on a scale of 0 to 10 (0 denoted no chicken flavor intensity and 10 denoted extremely strong chicken intensity). The results are reported herein below:

### Example 4a: Sensory evaluation of aroma release of flavor capsules during cooking without mechanical rupture of capsule shell

1 g of capsules prepared according to Example 1b were added to 100 g of an aqueous solution containing 1 wt.% table salt, 1 wt.% sugar and 5 wt.% maltodextrin (DE 18, obtained from Roquette, France) in a 300 ml beaker, intended to serve as a model liquid food. The mixture was heated in a water bath, with the water bath temperature set to 150°C. As soon as the temperature inside the beaker had reached 80°C, eight untrained panelists were asked to describe the aroma perceived at a distance 30 centimeters away from the opening of the beaker, the choices being "1. Nothing perceived; 2. Weak aroma perceived; 3. Strong aroma perceived"; the panelists were also asked to describe the perceived tonality in words. 100% of the panelists indicated a strong perception of the aroma and immediately recognized the flavor tonality. This example confirms that in additional to the strong flavor release on mastication, the method of flavoring food products provides a means to deliver a flavor by slow diffusion, without mechanical rupture of the capsule shell, during preparation of the food.

### Example 4b: Sensory evaluation of aroma release of flavor capsules after cooking upon mechanical rupture of the capsule shell

Immediately following the tests performed in Example 4a, 5 g of the liquid mixture containing the capsules was removed, the capsules were separated with a sieve and placed on a piece of Whatmann Benchkote Plus absorbent paper. After 10 minutes, the capsules were deliberately broken by pressing a microscope glass slide onto the sample. The same sensory evaluation as in Example 4a was performed again at a distance of 30 cm away from the absorbent paper. Additionally, the panelists were asked to compare the perceived aroma intensity to that evaluated in Example 4a ("Less intense / more intense"). All panelists indicated a strong perception of the aroma, and all panelists found the intensity upon breaking the capsules to be stronger the one perceived in the headspace in Example 4a.

## Claims

1. A flavored food product comprising a coacervate core-shell capsule comprising a flavor ingredient,
wherein the food product is selected from bouillons in gel form and soups in gel form.

2. The flavored food product according to claim 1, wherein the shell of the coacervate core-shell capsule comprises a protein and a non-protein polymer.

3. The flavored food product according to claim 2, wherein the protein is selected from the group consisting of a plant protein or gelatin, preferably wherein the protein is selected from gelatin.

4. The flavored food product according to claim 1, wherein the shell of the coacervate core-shell capsules comprise two non-protein polymers, preferably one of which is chitosan.

5. The flavored food product according to any one of claims 2 to 4, wherein the non-protein polymer is selected from the group of polymers consisting of gum arabic, carboxymethylcellulose, xanthan, agar, alginate salts, pectinate salts or carrageenan, preferably wherein the non-protein polymer is selected from gum arabic.

6. The flavored food product according to any one of claims 1 to 5, wherein the flavor ingredient is encapsulated in the core of the coacervate core-shell capsule.

7. The flavored food product according to any one of claims 1 to 6, wherein the core of the coacervate core-shell capsule comprises a fat matrix, preferably wherein the fat matrix comprises food grade oils.

8. The flavored food product according to any one of claims 1 to 7, wherein the shell of the capsule is cross-linked using formaldehyde, acetaldehyde, glutaraldehyde, glyoxal, chrome alum or transglutaminase, preferably transglutaminase.

9. The flavored food product according to any one of claims 1 to 8, wherein the coacervate core-shell capsule comprising a flavor ingredient is prepared by the method comprising the steps of:
- preparing a hydrocolloid solution by dissolving at least one first polymer in aqueous solution, preferably water; wherein the first polymer is a non-protein polymer or a protein polymer
- preparing a hydrocolloid solution by dissolving at least one second polymer, wherein the second polymer is a non-protein polymer in aqueous solution, preferably water;
- mixing the hydrocolloid solutions comprising at least one first polymer and at least one second polymer;
- preparing, an emulsion and/or suspension by emulsifying and/or suspending the flavoring ingredient in the solution;
- forming a colloid wall comprising the first and second polymer around droplets and/or particles of the flavoring ingredient present in an emulsion and/or suspension;
- optionally, cooling the hydrocolloid solutions to a temperature below the gelling temperature of the protein; and
- cross-linking the colloid wall.

10. The flavored food product according to any one of claims 8 to 9, wherein the cross-linking of the colloid wall has been/is carried out from 0.5 to 6 h, preferably from 1 h to 4 h, more preferably from 1.5 h to 3 h, at ambient temperature.

11. Method of conferring, improving, enhancing or modifying the flavor of a flavored composition or in a flavored consumer product by using a coacervate core-shell capsule comprising a flavor ingredient, as defined in any one of claims 1 to 10, during the preparation of the flavor composition or flavored consumer product, such as by diffusion by exposure to heat and/or humidity, and, optionally, by mastication of the food product, such as by mechanical breakage of the capsules, wherein the flavor relates to the flavor intensity,
wherein the flavored composition or the flavored consumer product is selected from the group consisting bouillons in gel form and soups in gel form.

12. Use of a coacervate core-shell capsule comprising a flavor ingredient, as defined in any one of claims 1 to 10, for conferring, improving, enhancing or modifying the flavor of a flavored composition or flavored consumer product during preparation of the food product, such as by diffusion by exposure to heat and/or humidity, and, optionally, by mastication, such as by mechanical breakage of the capsules, wherein the flavor relates to the flavor intensity,
wherein the flavored composition or the flavored consumer is selected from the group consisting of bouillons in gel form and soups in gel form.

## Patentansprüche

1. Aromatisiertes Lebensmittelprodukt, das eine Koazervat-Kern/Hülle-Kapsel umfasst, die einen Aromastoff umfasst,
wobei das Lebensmittelprodukt ausgewählt ist aus Bouillons in Gelform und Suppen in Gelform.

2. Aromatisiertes Lebensmittelprodukt nach Anspruch 1, wobei die Hülle der Koazervat-Kern/Hülle-Kapsel ein Protein und ein Nicht-Protein-Polymer umfasst.

3. Aromatisiertes Lebensmittelprodukt nach Anspruch 2, wobei das Protein ausgewählt ist aus der Gruppe bestehend aus einem pflanzlichen Protein oder Gelatine, vorzugsweise wobei das Protein aus Gelatine ausgewählt ist.

4. Aromatisiertes Lebensmittelprodukt nach Anspruch 1, wobei die Hülle der Koazervat-Kern/Hülle-Kapseln zwei Nicht-Protein-Polymere umfasst, von denen eines vorzugsweise Chitosan ist.

5. Aromatisiertes Lebensmittelprodukt nach einem der Ansprüche 2 bis 4, wobei das Nicht-Protein-Polymer ausgewählt ist aus der Gruppe von Polymeren bestehend aus Gummi arabicum, Carboxymethylcellulose, Xanthan, Agar, Alginatsalzen, Pektinatsalzen oder Carrageen, vorzugsweise wobei das Nicht-Protein-Polymer aus Gummi arabicum ausgewählt ist.

6. Aromatisiertes Lebensmittelprodukt nach einem der Ansprüche 1 bis 5, wobei der Aromastoff im Kern der Koazervat-Kern/Hülle-Kapsel eingekapselt ist.

7. Aromatisiertes Lebensmittelprodukt nach einem der Ansprüche 1 bis 6, wobei der Kern der Koazervat-Kern/Hülle-Kapsel eine Fettmatrix umfasst, vorzugsweise wobei die Fettmatrix lebensmittelverträgliche Öle umfasst.

8. Aromatisiertes Lebensmittelprodukt nach einem der Ansprüche 1 bis 7, wobei die Hülle der Kapsel unter Verwendung von Formaldehyd, Acetaldehyd, Glutaraldehyd, Glyoxal, Chromalaun oder Transglutaminase, vorzugsweise Transglutaminase, vernetzt ist.

9. Aromatisiertes Lebensmittelprodukt nach einem der Ansprüche 1 bis 8, wobei die Koazervat-Kern/Hülle-Kapsel, die einen Aromastoff umfasst, nach dem Verfahren hergestellt wird, das die folgenden Schritte umfasst:
- Herstellen einer Hydrokolloidlösung durch Auflösen mindestens eines ersten Polymers in einer wässrigen Lösung, vorzugsweise Wasser; wobei das erste Polymer ein Nicht-Protein-Polymer oder ein Proteinpolymer ist;
- Herstellen einer Hydrokolloidlösung durch Auflösen mindestens eines zweiten Polymers, wobei das zweite Polymer ein Nicht-Protein-Polymer ist, in wässriger Lösung, vorzugsweise Wasser;
- Mischen der Hydrokolloidlösungen, die mindestens ein erstes Polymer und mindestens ein zweites Polymer umfassen;
- Herstellen einer Emulsion und/oder Suspension durch Emulgieren und/oder Suspendieren des Aromastoffs in der Lösung;
- Bilden einer Kolloidwand, die das erste und das zweite Polymer umfasst, um Tröpfchen und/oder Partikel des in einer Emulsion und/oder Suspension vorliegenden Aromastoffs herum;
- wahlweise Abkühlen der Hydrokolloidlösungen auf eine Temperatur unterhalb der Geliertemperatur des Proteins; und
- Vernetzen der Kolloidwand.

10. Aromatisiertes Lebensmittelprodukt nach einem der Ansprüche 8 bis 9, wobei das Vernetzen der Kolloidwand bei Umgebungstemperatur über 0,5 bis 6 Stunden, vorzugsweise 1 Stunde bis 4 Stunden, bevorzugter 1,5 Stunden bis 3 Stunden, ausgeführt wurde bzw. wird.

11. Verfahren zum Verleihen, Verbessern, Verstärken oder Modifizieren des Geschmacks einer aromatisierten Zusammensetzung oder eines aromatisierten Konsumprodukts unter Verwendung einer Koazervat-Kern/Hülle-Kapsel, die einen Aromastoff umfasst, wie in einem der Ansprüche 1 bis 10 definiert, während der Herstellung der Aromazusammensetzung oder des aromatisierten Konsumprodukts, wie etwa durch Diffusion durch Exposition gegenüber Wärme und/oder Feuchtigkeit, und wahlweise durch Mastikation des Lebensmittelprodukts, wie etwa durch mechanisches Aufbrechen der Kapseln, wobei sich der Geschmack auf die Geschmacksintensität bezieht,
wobei die aromatisierte Zusammensetzung oder das aromatisierte Konsumprodukt ausgewählt ist aus der Gruppe bestehend aus Bouillons in Gelform und Suppen in Gelform.

12. Verwendung einer Koazervat-Kern/Hülle-Kapsel, die einen Aromastoff, wie in einem der Ansprüche 1 bis 10 definiert, umfasst, zum Verleihen, Verbessern, Verstärken oder Modifizieren des Geschmacks einer aromatisierten Zusammensetzung oder eines aromatisierten Konsumprodukts während der Herstellung des Lebensmittelprodukts, wie etwa durch Diffusion durch Exposition gegenüber Wärme und/oder Feuchtigkeit, und wahlweise durch Mastikation, wie etwa durch mechanisches Aufbrechen der Kapseln, wobei sich der Geschmack auf die Geschmacksintensität bezieht,
wobei die aromatisierte Zusammensetzung oder das aromatisierte Konsum ausgewählt ist aus der Gruppe bestehend aus Bouillons in Gelform und Suppen in Gelform.

## Revendications

1. Produit alimentaire aromatisé comprenant une capsule cœur-écorce de coacervat comprenant un ingrédient aromatique,
dans lequel le produit alimentaire est sélectionné parmi les bouillons sous forme de gel et les soupes sous forme de gel.

2. Produit alimentaire aromatisé selon la revendication 1, dans lequel l'écorce de la capsule cœur-écorce de coacervat comprend une protéine et un polymère non protéique.

3. Produit alimentaire aromatisé selon la revendication 2, dans lequel la protéine est sélectionnée dans le groupe consistant en une protéine végétale ou une gélatine, de préférence dans lequel la protéine est sélectionnée parmi une gélatine.

4. Produit alimentaire aromatisé selon la revendication 1, dans lequel l'écorce des capsules cœur-écorce de coacervat comprend deux polymères non protéiques, dont l'un est de préférence du chitosane.

5. Produit alimentaire aromatisé selon l'une quelconque des revendications 2 à 4, dans lequel le polymère non protéique est sélectionné dans le groupe de polymères consistant en la gomme arabique, la carboxyméthylcellulose, le xanthane, l'agar, les sels d'alginate, les sels de pectinate ou un carraghénane, de préférence dans lequel le polymère non protéique est sélectionné parmi la gomme arabique.

6. Produit alimentaire aromatisé selon l'une quelconque des revendications 1 à 5, dans lequel l'ingrédient aromatisant est encapsulé dans le cœur de la capsule cœur-écorce de coacervat.

7. Produit alimentaire aromatisé selon l'une quelconque des revendications 1 à 6, dans lequel le cœur de la capsule cœur-écorce de coacervat comprend une matrice grasse, de préférence dans lequel la matrice grasse comprend des huiles de qualité alimentaire.

8. Produit alimentaire aromatisé selon l'une quelconque des revendications 1 à 7, dans lequel l'écorce de la capsule est réticulée à l'aide de formaldéhyde, d'acétaldéhyde, de glutaraldéhyde, de glyoxal, d'alun de chrome ou de transglutaminase, de préférence de transglutaminase.

9. Produit alimentaire aromatisé selon l'une quelconque des revendications 1 à 8, dans lequel la capsule cœur-écorce de coacervat comprenant un ingrédient aromatique est préparée par le procédé comprenant les étapes suivantes :
- la préparation d'une solution d'hydrocolloïde par dissolution d'au moins un premier polymère dans une solution aqueuse, de préférence de l'eau ; dans lequel le premier polymère est un polymère non protéique ou un polymère protéique
- la préparation d'une solution d'hydrocolloïde par dissolution d'au moins un second polymère, dans lequel le second polymère est un polymère non protéique en solution aqueuse, de préférence de l'eau ;
- le mélange des solutions d'hydrocolloïde comprenant au moins un premier polymère et au moins un second polymère ;
- la préparation, d'une émulsion et/ou d'une suspension par émulsification et/ou mise en suspension de l'ingrédient aromatisant dans la solution ;
- la formation d'une paroi colloïdale comprenant les premier et second polymères autour de gouttelettes et/ou de particules de l'ingrédient aromatisant présentes dans une émulsion et/ou une suspension ;
- éventuellement, le refroidissement des solutions d'hydrocolloïde à une température inférieure à la température de gélification de la protéine ; et
- la réticulation de la paroi colloïdale.

10. Produit alimentaire aromatisé selon l'une quelconque des revendications 8 à 9, dans lequel la réticulation de la paroi colloïdale a été/est effectuée pendant 0,5 à 6 h, de préférence de 1 h à 4 h, plus préférentiellement de 1,5 h à 3 h, à température ambiante.

11. Procédé destiné à conférer, améliorer, rehausser ou modifier la saveur d'une composition aromatisée ou d'un produit de consommation aromatisé, par l'utilisation d'une capsule cœur-écorce de coacervat comprenant un ingrédient aromatique, tel que défini dans l'une quelconque des revendications 1 à 10, lors de la préparation de la composition aromatisée ou du produit de consommation aromatisé, notamment par diffusion sous l'effet de la chaleur et/ou de l'humidité et, éventuellement, par mastication du produit alimentaire, par exemple par rupture mécanique des capsules, dans lequel la saveur est liée à l'intensité aromatique,
dans lequel la composition aromatisée ou le produit de consommation aromatisé est sélectionné dans le groupe consistant en des bouillons sous forme de gel et de soupes sous forme de gel.

12. Utilisation d'une capsule cœur-écorce de coacervat comprenant un ingrédient aromatique, tel que défini dans l'une quelconque des revendications 1 à 10, pour conférer, améliorer, rehausser ou modifier la saveur d'une composition aromatisée ou d'un produit de consommation aromatisé lors de la préparation du produit alimentaire, notamment par diffusion sous l'effet de la chaleur et/ou de l'humidité et, éventuellement, par mastication, par exemple par rupture mécanique des capsules, dans laquelle la saveur est liée à l'intensité aromatique,
dans laquelle la composition aromatisée ou le produit de consommation aromatisé est sélectionné dans le groupe consistant en les bouillons sous forme de gel et les soupes sous forme de gel.
